# FASCICULE DE BREVET EUROPEEN

(11) **EP 4 433 877 B1**
(45) Date de publication et mention de la délivrance du brevet: **14.10.2026**
(21) Numéro de dépôt: 22813544.8
(22) Date de dépôt: 07.11.2022
(51) Int. Cl.: G03H 1/22, G03H 1/00, G02F 1/1347

(54) **MODULATION DE FRONT D'ONDE**
WELLENFRONTMODULATION
WAVEFRONT MODULATION

(30) Priorité: 15.11.2021 FR 2112033
(43) Date de publication de la demande: 25.09.2024
(73) Titulaire: Opticalp, SCOP SAS, 38600 Fontaine (FR)
(72) Inventeur: RENAUD-GOUD, Philippe, 38000 Grenoble (FR)
(74) Mandataire: Cabinet Beaumont
(86) Numéro de dépôt international: PCT/EP2022/080912
(87) Numéro de publication internationale: WO 2023/083727

(56) Documents cités:
- EP-A2- 3 839 595
- US-A1- 2017 123 204

## Description

La présente demande est basée sur, et revendique la priorité de la demande de brevet français FR2112033 déposée le 15 novembre 2021 et ayant pour titre "Modulation de front d'onde".

### Domaine technique

La présente description concerne de façon générale les systèmes optiques, et, plus particulièrement, les systèmes optiques de modulation de front d'onde.

### Technique antérieure

De très nombreuses applications connues comprennent un système optique de modulation de front d'onde, configuré pour mettre en œuvre une mise en forme d'un faisceau lumineux.

Ces systèmes optiques de modulation de front d'onde comprennent chacun au moins un dispositif optique de modulation spatiale de front d'onde ou modulateur spatial de lumière (SLM de l'anglais "Spatial Light Modulator").

Parmi les dispositifs optiques de modulation de front d'onde connus on s'intéresse ici plus particulièrement aux dispositifs optiques de modulation de front d'onde commandables, c'est-à-dire des dispositifs optiques configurés pour appliquer une modulation à un front d'onde qui soit commandable, et qui puisse donc être modifiée en commandant de manière appropriée ces dispositifs.

Parmi les dispositifs optiques de modulation de front d'onde commandables connus, on distingue les dispositifs de type "pixélisé" et les dispositifs de type "continu". Un dispositif de modulation de front d'onde commandable de type pixelisé est tel qu'il fournit un front d'onde comprenant une partie, ou composante, modulée et commandable et une partie, ou composante, constante ou fixe quelle que soit la commande appliquée au dispositif. A l'inverse, un dispositif de modulation de front d'onde commandable de type continu est tel qu'il fournit un front d'onde ne comprenant qu'une composante modulée et commandable, c'est-à-dire un front d'onde modulé dépourvu de composante fixe et indépendante de la commande appliquée au dispositif.

Les dispositifs optiques de modulation de front d'onde commandables de type pixelisé comprennent, par exemple, les matrices de micro-miroirs de type MEMS (de l'anglais Micro Electro Mechanical System - microsystème électromécanique) et les modulateurs spatiaux de lumière à cristaux liquides sur silicium (SLM LCOS de l'anglais "SLM Liquid Cristal On Silicon"). Les dispositifs optiques de modulation de front d'onde commandables de type continu comprennent, par exemple, les modulateurs spatiaux de lumière acousto-optiques, les miroirs déformables et les lentilles déformables. EP 3 839 595 A2 et US 2017/123204 A1 représentent des documents utiles à la compréhension de l'invention.

### Résumé

Il existe un besoin de pallier tout ou partie des inconvénients des systèmes de modulations de front d'onde connus.

Un mode de réalisation pallie tout ou partie des inconvénients des systèmes de modulations de front d'onde connus.

Un mode de réalisation prévoit un système optique de modulation de front d'onde comprenant un premier dispositif de modulation de front d'onde et un deuxième dispositif de modulation de front d'onde, dans lequel :
le premier dispositif est disposé en amont du deuxième dispositif ;
les premier et deuxième dispositifs sont commandables ;
l'un des premier et deuxième dispositifs est de type pixelisé, l'autre des premier et deuxième dispositifs étant de type continu ;
les premier et deuxième dispositifs sont configurés pour fournir une distribution de champ cible comprenant une première composante commandable par les premier et deuxième dispositifs et une deuxième composante commandable uniquement par celui des premier et deuxième dispositifs qui est de type continu, la deuxième composante participant à un signal utile de la distribution de champ cible et étant déterminée par celui des premier et deuxième dispositifs qui est de type pixélisé et par une commande appliquée à celui des premier et deuxième dispositifs qui est de type continu.

Selon un mode de réalisation :
le premier dispositif est configuré pour recevoir une distribution de champ A1in et fournir une distribution de champ A1out égale à Fmod1.A1in, avec Fmod1 une fonction de transfert du premier dispositif ;
le deuxième dispositif est configuré pour recevoir une distribution de champ A2in et pour fournir une distribution de champ A2out égale à Fmod2.A2in, avec Fmod2 une fonction de transfert du deuxième dispositif ; et
le système est configuré pour que la distribution A2in soit fonction de la distribution A1out, et, en outre :
   - le premier dispositif est de type pixelisé et Fmod1=Fmod1-var+Fmod1-0 avec Fmod1-var une composante commandable et Fmod1-0 une composante fixe ; ou
   - le deuxième dispositif est de type pixélisé et Fmod2=Fmod2-var+Fmod2-0 avec Fmod2-var une composante commandable et Fmod2-0 une composante fixe.

Selon un mode de réalisation :
le premier dispositif est configuré pour recevoir une distribution de champ A1in et fournir une distribution de champ A1out égale à Fmod1(A1in), avec Fmod1 une fonction de transfert du premier dispositif ;
le deuxième dispositif est configuré pour recevoir une distribution de champ A2in et pour fournir une distribution de champ A2out égale à Fmod2(A2in), avec Fmod2 une fonction de transfert du deuxième dispositif ; et
le système est configuré pour que la distribution A2in soit fonction de la distribution A1out, et, en outre :
   - le premier dispositif est de type pixelisé et Fmod1=Fmod1-var+Fmod1-0 avec Fmod1-var une composante commandable et Fmod1-0 une composante fixe ; ou
   - le deuxième dispositif est de type pixélisé et Fmod2=Fmod2-var+Fmod2-0 avec Fmod2-var une composante commandable et Fmod2-0 une composante fixe.

Selon un mode de réalisation, le système optique de modulation de front d'onde comprend une optique relai configurée pour fournir la distribution A2in à partir de la distribution A1out.

Selon un mode de réalisation, lorsque le premier dispositif est approximé par un premier plan et le deuxième dispositif est approximé par un deuxième plan, l'optique relai est configurée pour mettre en œuvre l'équation suivante :
A2in (X, Y) = F [F [A1out (x, y) .L1 (x, y) ] (u, v) . L2 (u, v)] (X, Y) , avec x et y des coordonnées cartésiennes dans le premier plan, X et Y des coordonnées cartésiennes dans le deuxième plan, L1(x,y) une fonction de transfert appliquée à la distribution A1out(x,y), F l'opération transformée de Fourier, u et v des coordonnées dans un plan de Fourier de l'optique relai, et L2 (u, v) une fonction de transfert appliquée à une distribution exprimée dans ledit plan de Fourier.

Selon un mode de réalisation, l'optique relai est afocale ou quasi-afocale.

Selon un mode de réalisation le système optique est configuré pour mettre en œuvre une propagation libre du premier dispositif vers le deuxième dispositif.

Selon un mode de réalisation, A2in est égal à A1out, par exemple à un changement de repère cartésien près.

Selon un mode de réalisation, le premier dispositif est de type pixélisé.

Selon un mode de réalisation, le système optique de modulation de front d'onde comprend en outre un circuit de commande configuré pour fournir des signaux de commande aux premier et deuxième dispositifs.

Selon un mode de réalisation, le circuit de commande est configuré pour modifier lesdits signaux de commande de sorte à modifier ladite distribution de champ cible.

Selon un mode de réalisation, le premier dispositif met en œuvre au moins une modulation en phase et le deuxième dispositif met en œuvre au moins une modulation en phase.

Selon un mode de réalisation, celui des premier et deuxième dispositifs qui est de type pixélisé est un dispositif à cristaux liquides sur silicium.

Selon un mode de réalisation, celui des premier et deuxième dispositifs qui est de type continu est un miroir déformable.

Selon un mode de réalisation, le système optique comprend en outre un objectif de focalisation configuré pour recevoir la distribution de champ cible A2out.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un mode de réalisation d'un système optique de modulation de front d'onde ; et
la figure 2 représente, de manière schématique, un exemple de modélisation d'une optique relai du système optique de modulation de front d'onde de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la mise en œuvre des dispositifs optiques de modulation de front d'onde commandables utilisés dans le système de modulation de front d'onde décrit ici n'a pas été détaillée, ces dispositifs optiques de modulation de front d'onde commandables et leurs mises en œuvre étant bien connus de la personne du métier.

Par ailleurs, les diverses applications connues dans lesquelles un système de modulation de front d'onde tel que décrit ici peut être mis en œuvre n'ont pas été détaillées, ce système de modulation de front étant compatible avec les applications connues dans lesquelles un système de modulation de front d'onde est mis en œuvre.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, sauf indication contraire, on appelle distribution, ou répartition, de champ scalaire (électrique ou magnétique) A, par exemple, l'objet mathématique A qui à chaque point d'un plan ou d'un volume associe une valeur complexe correspondante représentative du champ électromagnétique en ce point, et notamment de la phase en ce point. A titre d'exemple, une définition d'un champ scalaire est donnée dans le chapitre 3 de la seconde édition du livre de Joseph W. Goodman intitulé "Introduction to Fourier Optics", notamment en relation avec l'équation 3-9 de ce chapitre. Une telle distribution peut notamment être représentée sous forme matricielle. Par exemple, une distribution peut être représentée sous la forme d'une matrice dont l'une des dimensions est égale à 1, chaque valeur de la matrice étant alors, par exemple, égale à la valeur de la distribution en un point correspondant du plan de la distribution.

En outre, dans la suite de la description, sauf indication contraire, un modulateur spatial de lumière est approximé par un plan infiniment fin. Dans une telle approximation, l'action du modulateur spatial de lumière est décrite par une fonction de transfert entre une première distribution Ain reçue par le modulateur et une deuxième distribution Aout fournie par le modulateur, telle que Aout est égale à la fonction de transfert appliquée à la distribution Ain, par exemple telle que Aout est égale au produit de la distribution Ain par la fonction de transfert.

Dans la suite de la description, un premier élément d'un système optique est dit en amont, respectivement en aval, d'un deuxième élément du système optique, lorsque de la lumière propagée par le système optique atteint le premier élément, respectivement le deuxième élément, avant le deuxième élément, respectivement le premier élément.

Dans la suite de la description, sauf indication contraire, l'expression "distribution cible" désigne à la fois une distribution que l'on souhaite fournir avec un système optique, c'est-à-dire une distribution cible théorique, et la distribution effectivement fournie par ce système optique, c'est-à-dire une distribution cible pratique. Par rapport à la distribution cible théorique, la distribution cible pratique comprend, par exemple, un signal utile conforme à la distribution cible théorique, c'est-à-dire qui respecte cette distribution cible théorique, et un signal parasite, c'est-à-dire un signal non désiré qui ne respecte pas cette distribution cible théorique. Dans la distribution cible fournie par le système, on peut alors, par exemple, définir un rapport signal sur bruit, égal au ratio du signal utile de la distribution cible fournie sur le signal parasite de la distribution cible fournie.

Dans les systèmes connus de modulation de front d'onde, les modulateurs de front d'onde commandables de type pixelisé permettent d'introduire des déphasages avec une plus grande résolution spatiale que ce que permettent les modulateurs de front d'onde commandables de type continu. Toutefois, ces modulateurs de type pixelisés ne sont pas en mesure de moduler toute la lumière qu'ils reçoivent, et fournissent donc une composante fixe non commandable qui comprend par exemple un ordre 0 de diffraction. Dans ces systèmes connus de modulation de front d'onde, la composante fixe non commandable résulte en un signal parasite dans la distribution de champ cible fournie en sortie de ces systèmes.

Il a été proposé de diffuser ce signal parasite dans la distribution cible fournie par le système de modulation de front d'onde en introduisant des aberrations optiques sur la composante fixe non commandable fournie par un modulateur de type pixélisé. Il a également été proposé de supprimer ce signal parasite en déviant, en absorbant ou en stoppant la composante fixe non commandable pour qu'elle ne participe pas à la distribution de champ cible fournie par le système de modulation de front d'onde.

Toutefois, cela implique que la puissance lumineuse transportée par la composante fixe non commandable est perdue puisqu'elle ne participe pas au signal utile de la distribution fournie. Cette puissance lumineuse transportée par la composante fixe peut même être destructrice lorsqu'elle est trop importante.

La présente description propose un système de modulation de front d'onde comprenant un modulateur de front d'onde commandable de type pixelisé et un modulateur de front d'onde commandable de type continu. Ces deux modulateurs sont configurés, par exemple par l'intermédiaire des signaux de commande qu'ils reçoivent, de sorte qu'une composante fixe non commandable par le modulateur de type pixelisé contribue au signal utile d'une distribution cible fournie par le système, ou dit autrement, que le signal utile de la distribution cible fournie par le système comprenne la composante non commandable fournie par le modulateur de type pixelisé. Ce fonctionnement est rendu possible par l'association du modulateur commandable de type continu au modulateur commandable de type pixelisé.

En outre, une telle configuration permet de bénéficier simultanément de la résolution du modulateur de type pixelisé, plus grande que celle du modulateur de type continu, et de l'amplitude de déflection du modulateur de type continu, plus grande que celle du modulateur de type pixelisé.

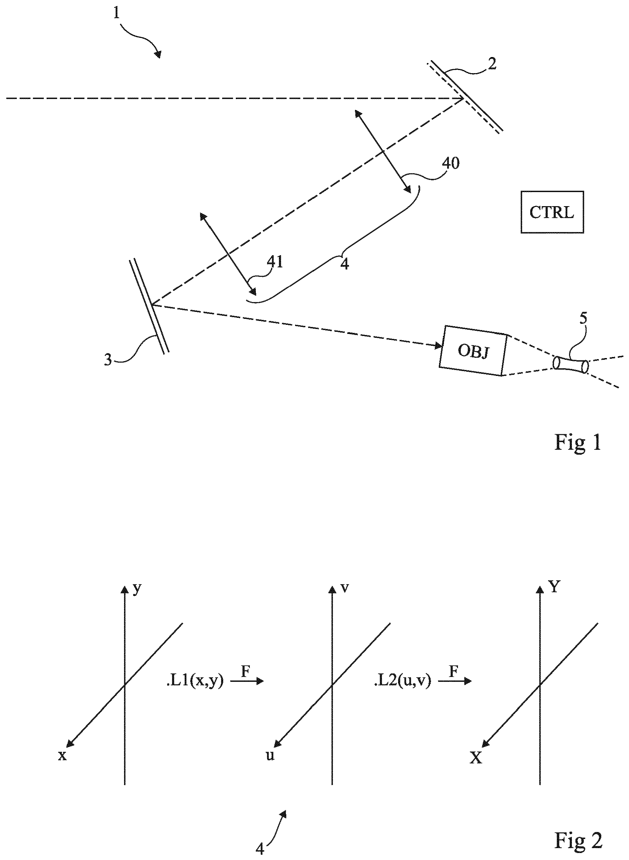

La figure 1 représente, de manière schématique, un exemple de mode de réalisation d'un tel système de modulation de front d'onde, référencé 1 en figure 1.

Le système 1 comprend un premier modulateur spatial de lumière 2 et un deuxième modulateur spatial de lumière 3. Chacun des modulateurs 2 et 3 est commandable. Par exemple, le système 1 comprend un circuit de commande CTRL configuré pour fournir des signaux de commande aux modulateurs 2 et 3.

Dans le système 1, le modulateur 2 est disposé en amont du modulateur 3. Dit autrement, le système 1 est configuré pour que de la lumière atteignant le modulateur 2 soit modulée par le modulateur 2 avant d'être fournie au modulateur 3.

L'un des modulateurs 2 et 3 est de type pixelisé, l'autre étant de type continu. De préférence, comme cela est représenté en figure 1, le modulateur 2 est de type pixelisé, le modulateur 3 étant alors de type continu.

Les modulateurs 2 et 3 sont configurés, par exemple via les signaux de commande qu'ils reçoivent du circuit CTRL, pour fournir une distribution de champ cible A2out. La distribution A2out est fournie par le modulateur 3, ou, dit autrement, est la distribution de sortie du modulateur 3.

Dans le présent système 1, les modulateurs 2 et 3 sont plus particulièrement configurés pour que la distribution A2out comprenne une composante commandable par les modulateurs 2 et 3, c'est-à-dire une composante déterminée par la commande appliquée au modulateur 2 et par la commande appliquée au modulateur 3, et une composante commandable uniquement par le modulateur 3. La composante commandable uniquement par le modulateur 3 de type continu est indépendante de la commande appliquée au modulateur 2 de type pixelisé. En outre, les modulateurs 2 et 3 sont configurés pour que, dans la distribution A2out, la composante commandable uniquement par le modulateur 3 de type continu participe au signal utile de la distribution cible A2out. Dit autrement, cette composante commandable uniquement par le modulateur 3 de type continu ne contribue pas au signal parasite de la distribution A2out. Dit encore autrement, le signal utile de la distribution A2out comprend la composante de la distribution A2out qui est uniquement commandable par le modulateur 3 de type continu.

Le modulateur 2 de type pixelisé fournit une distribution de champ A1out. Du fait que le modulateur 2 est de type pixelisé, la distribution de champ A1out comprend une composante commandable par le modulateur 2 et une composante fixe non commandable par ce même modulateur 2, c'est-à-dire une composante fixe indépendante de la commande appliquée au modulateur 2. Cette composante fixe non commandable est déterminée par la mise en œuvre du modulateur 2. La composante fixe non commandable de la distribution de champ A1out détermine, avec la commande appliquée au modulateur 3, la composante de la distribution A2out qui est commandable uniquement par le modulateur 3. En outre, la composante commandable de la distribution A1out détermine, avec la commande appliquée au modulateur 3, la composante de la distribution A2out qui est commandable par les deux modulateurs 2 et 3.

Le modulateur 2 reçoit une distribution de champ A1in. A titre d'exemple, la distribution A1in correspond à un faisceau lumineux à front d'onde plan, monochromatique et cohérent. Toutefois, dans d'autres exemples, la distribution A1in correspond à un faisceau lumineux ayant subi une mise en forme préalable, par exemple, un faisceau lumineux ayant déjà subi une modulation de front d'onde.

Le modulateur 2 est configuré pour fournir la distribution A1out à partir de la distribution A1in. Par exemple, dans le cas où le modulateur 2 est approximé par un plan, le modulateur 2 est configuré pour que la distribution de champ A1out soit égale au produit de la distribution de champ A1in et d'une fonction de transfert Fmod1 du modulateur 2. Dit autrement, le modulateur 2 met en œuvre l'équation suivante :$A 1 out = Fmod 1 . A 1 in$

Dans l'exemple de la figure 1 où le dispositif 2 est de type pixélisé, la fonction de transfert Fmod1 du modulateur 2 peut s'exprimer comme la somme d'une composante Fmod1-var et d'une composante Fmod1-0. La composante, ou fonction de transfert, Fmod1-var est commandable et dépend donc de la commande appliquée au dispositif 2. La composante, ou fonction de transfert Fmod1-0 est fixe et est déterminée par la mise en œuvre du modulateur 2. La composante Fmod1-0 est non commandable par le modulateur 2, c'est-à-dire que la composante Fmod1-0 est indépendante de la commande appliquée au modulateur 2 et est constante quelle que soit cette commande. A titre d'exemple, la composante fixe Fmod1-0 de la fonction de transfert Fmod1 est déterminée, au moins en partie, par les espaces entre les pixels du modulateur 2 et les matériaux disposés dans ces espaces. Il en résulte que A1out est égale à Fmod1-0.A1in plus Fmod1-var.Ain, le produit Fmod1-var.A1in étant la composante commandable par le modulateur 2 de la distribution A1out et le produit Fmod1-0.A1in étant la composante fixe, non commandable par le modulateur 2, de la distribution A1out.

A titre d'exemple, en figure 1, le modulateur 2 fonctionne en réflexion. A titre d'exemple, lorsque le modulateur 2 de type pixelisé fonctionne en réflexion, la composante Fmod1-0 est alors au moins en partie déterminée par la réflexion inter-pixel du modulateur 2.

A titre d'exemple, le modulateur 2 est un modulateur spatial de lumière à cristaux liquides sur silicium (SLM LCOS), bien que d'autres exemples modulateurs commandables de type pixelisé puissent être utilisés comme modulateur 2.

Par ailleurs, le modulateur 3 reçoit une distribution de champ A2in. Le modulateur 3 est configuré pour fournir la distribution A2out à partir de la distribution A2in. Par exemple, dans le cas où le modulateur 3 est approximé par un plan, le modulateur 3 est configuré pour que la distribution de champ A2out soit égale au produit de la distribution de champ A2in et d'une fonction de transfert Fmod2 du modulateur 3. Dit autrement, le modulateur 3 met en œuvre l'équation suivante :$A 2 out = Fmod 2 . A 2 in$

Dans l'exemple de la figure 1 où le modulateur 3 est de type continu, la fonction de transfert Fmod2 du modulateur 3 ne dépend que de la commande appliquée au dispositif 3. Dit autrement, la fonction de transfert Fmod2 ne comprend qu'une composante commandable Fmod2-var et est dépourvue de composante fixe Fmod2-0 qui serait indépendante de la commande du modulateur 3 et déterminée uniquement par la façon dont est mis en œuvre du modulateur 3.

A titre d'exemple, en figure 1, le modulateur 3 fonctionne en réflexion. A titre d'exemple, le modulateur 3 est un miroir déformable, bien que d'autres exemples modulateurs commandables de type continu puissent être utilisés comme modulateur 3.

La distribution A2in est déterminée par la distribution A1out, ou, dit autrement, est fonction de la distribution A1out. En particulier, dans cet exemple où le modulateur 2 est de type pixelisé, la distribution A2in comprend, comme la distribution A1out, une composante commandable par le dispositif 2 et une composante A2in-0 non commandable par le dispositif 2. Ainsi le produit de la fonction Fmod2-var et de la composante A2in-0 de la distribution A2in correspond à une composante de la distribution A2out qui n'est commandable que par le dispositif 3.

Selon un mode de réalisation, comme cela est illustré en figure 1, le système 1 comprend une optique relai 4 entre les modulateurs 2 et 3. L'optique relai est configurée pour fournir la distribution A2in à partir de la distribution A1out, c'est-à-dire, uniquement à partir de cette distribution A1out. A titre d'exemple, l'optique relai 4 est configurée pour imager le modulateur 2 sur le modulateur 3, par exemple pour imager la face du modulateur 2 fournissant de la lumière sur la face du modulateur 3 configurée pour recevoir de la lumière à moduler. De préférence, l'optique relai 4 est afocale ou quasi-afocale. De préférence, l'optique relai est fixe, ou, dit autrement, n'est pas commandable.

Dans l'exemple de la figure 1, l'optique relai comprend une paire de lentilles 40, 41, par exemple des lentilles convergentes. A titre d'exemple, la lentille 40 a son plan objet confondu avec le modulateur 2 et son plan image confondu avec le plan objet de la lentille 41, la lentille 41 ayant son plan image confondu avec le modulateur 3. Toutefois, l'optique relai 4 ne se limite pas à cet exemple. Par exemple, chacune des lentilles 40 et 41 ci-dessus peut être remplacée par un doublet de lentilles. Plus généralement, l'optique relai 4 peut comprendre un nombre quelconque de lentilles, pas nécessairement toutes convergentes, et/ou un nombre quelconque de miroirs plans, concaves et/ou convexes. Par exemple l'optique relai 4 peut être de type 4f ou de type Offner.

La personne du métier est en mesure de caractériser l'optique relai 4 et d'en déduire comment la distribution A1out détermine la distribution A2in, c'est à dire comment la distribution A2in est obtenue à partir de la distribution A1out lorsque l'optique relai 4 reçoit la distribution A1out et fournit la distribution A2in à partir de cette distribution A1out.

Bien que l'on ait représenté en figure 1 un exemple de mode de réalisation où le système 1 comprend l'optique relai 4, dans des variantes de réalisation, le système 1 est dépourvu de l'optique relai 4. Dans ce cas, le système 1 peut mettre en œuvre une propagation libre de la lumière du modulateur 2 vers le modulateur 3. La personne du métier est en mesure de caractériser cette propagation libre et d'en déduire comment la distribution A1out détermine la distribution A2in, c'est à dire comment la distribution A2in est obtenue à partir de la distribution A1out. Selon une variante de réalisation particulière, le système 1 est dépourvu de l'optique relai 4 et est configuré pour que la distribution A2in soit égale à la distribution A1out, par exemple en prévoyant que les modulateurs 2 et 3 soient accolés l'un à l'autre et que l'un au moins des modulateurs 2 et 3 fonctionne en transmission de lumière. La distribution A2in est dite égale à la distribution A1out, par exemple, lorsque la distribution A2in est égale à la distribution A1out exprimée dans un système de coordonnées cartésiennes différent du système de coordonnées cartésiennes dans lequel est exprimée la distribution A1out, c'est à dire quand la distribution A2in est obtenue par un changement de repère à partir de la distribution A1out.

La personne du métier est en mesure de déterminer les commandes appliquées aux modulateurs 2 et 3 pour que la composante de la distribution A2out qui est commandable uniquement par le modulateur 3 de type continu contribue au signal utile de la distribution cible A2out, c'est-à-dire pour que la composante fixe de la distribution A1out ne corresponde pas, ou ne contribue pas, à un signal parasite dans la distribution A2out.

Pour cela la personne du métier pourra, par exemple, modifier des algorithmes bien connus dans le domaine de l'optique qui permettent de déterminer une modulation à appliquer à une distribution de champ pour obtenir une distribution de champ donnée. En effet, une fois cette modulation connue, il est à la portée de la personne du métier de déterminer la commande à appliquer à un modulateur commandable pour qu'il mette en œuvre cette modulation si la dynamique de modulation du modulateur le permet. A titre d'exemple, la personne du métier pourra modifier l'algorithme de Gerchberg-Saxton, l'algorithme Fienup, mis en œuvre ou non conjointement à la méthode dite "do not care" (ne pas prendre en compte), l'algorithme Yang-Gu, ou d'autres algorithmes, par exemple des algorithmes listés dans l'article "Elimination of a zero order-beam induced by a pixelated spatial light modulator for holographic projection" de H. Zhang et al, publié dans Appl. Opt., volume 48, pages 5834 à 5841, en Octobre 2009.

A titre d'exemple, la détermination des configurations, c'est-à-dire des commandes ou des fonctions de transfert, des modulateurs 2 et 3 comprend les étapes suivantes.

A une première étape, on recherche de manière itérative la fonction de transfert du modulateur qui est de type continu, à savoir le modulateur 3 dans l'exemple de la figure 1, qui conduise à ce que la composante de la distribution A2out qui est commandable uniquement par ce modulateur de type continu soit la plus proche possible de la distribution A2out cible.

Dit autrement, la première étape consiste à trouver la configuration du modulateur de type continu qui permette de répartir grossièrement l'intensité lumineuse là où la distribution cible A2out le nécessite.

A titre d'exemple, la première étape revient à minimiser une fonction représentative de l'écart entre la distribution cible A2out et sa composante qui est commandable uniquement par le modulateur de type continu.

A une deuxième étape suivant la première étape, on recherche de manière itérative la fonction de transfert du modulateur qui est de type pixelisé, à savoir le modulateur 2 dans l'exemple de la figure 1, qui conduise à la distribution cible A2out. Plus particulièrement, cette deuxième étape consiste à trouver la composante commandable de la fonction de transfert du modulateur de type continu qui conduit à la distribution cible A2out. Lors de cette deuxième étape, la configuration du modulateur de type continu est fixée et correspond à celle déterminée lors de la première étape précédente.

Dit autrement, la deuxième étape consiste à trouver la configuration du modulateur de type pixelisé qui permette de répartir plus finement, dans la distribution A2out fournit par le modulateur 3, l'intensité lumineuse déjà grossièrement repartie par le modulateur de type continu, de manière à obtenir la distribution cible A2out.

A titre d'exemple, la deuxième étape revient à minimiser une fonction représentative de l'écart entre la distribution A2out effectivement fournie par le modulateur 3 et le distribution A2out cible.

La succession des première et deuxième étapes peut être mise en œuvre plusieurs fois, par exemple lorsque la deuxième étape ne permet pas d'obtenir la distribution cible A2out. A chaque nouvelle mise en œuvre de la première étape, la configuration du modulateur de type pixelisé est par exemple fixée et correspond à la configuration de ce modulateur déterminée lors de la deuxième étape précédente.

Chacune des première et deuxième étapes ci-dessus est par exemple mise en œuvre en adaptant l'un des algorithmes précédemment cités.

Bien entendu, la personne du métier est en mesure, à partir de la description faite ci-dessus, de mettre en œuvre d'autres méthodes pour déterminer les commandes des modulateurs 2 et 3 de sorte à obtenir une distribution cible A2out dans laquelle la composante commandable uniquement par le modulateur de type continu contribue au signal utile de la distribution cible A2out.

Selon un mode de réalisation, comme cela est illustré dans l'exemple de la figure 1, le système 1 comprend un objectif de focalisation OBJ.

L'objectif OBJ est configuré pour focaliser un faisceau de lumière disponible après le modulateur 3, c'est-à-dire le faisceau de lumière fourni par le modulateur 3 et qui est conforme à la distribution A2out, dans un volume de travail 5. Plus particulièrement, l'objectif de focalisation OBJ est, par exemple, configuré pour recevoir la distribution de champ cible A2out. La distribution A2out2 détermine la distribution de champ dans le volume 5, donc dans des plans de ce volume 5. Dit d'une autre manière, une distribution de champ cible dans le volume 5 détermine la distribution cible A2out dans le deuxième plan.

La personne du métier cherchant à obtenir une distribution donnée dans le volume 5 ou dans un plan du volume 5 est en mesure de déterminer, pour un objectif OBJ de configuration donnée, la distribution A2out correspondante. Puis, connaissant la distribution A1in, la personne du métier est mesure de déterminer les commandes, ou configurations, des modulateurs 2 et 3 permettant d'obtenir cette distribution A2out correspondante, pour obtenir la distribution de champ voulue dans le volume 5.

A titre d'exemple plus détaillé, dans le cas où les modulateurs 2 et 3 sont approximés chacun par un plan, ou, dit autrement, dans une approximation où les modulateurs 2 et 3 sont infiniment fins, on appelle x et y les coordonnées cartésiennes d'un point dans un premier plan correspondant au modulateur 2, et X et Y les coordonnées cartésiennes d'un point dans un deuxième plan correspondant au modulateur 3. Les distributions A1in et A1out sont alors des distributions de champ dans le premier plan pouvant s'écrire A1in(x,y) et A1out(x,y), les distributions A2in et A2out étant des distributions de champ dans le deuxième plan pouvant s'écrire A2in(X,Y) et A2out (X, Y) .

Dans cette approximation, la fonction de transfert Fmod1 du modulateur 2 s'écrit Fmod1(x,y). La fonction Fmod1(x,y) entre la distribution A1in(x,y) et la distribution A1out(x,y) est une fonction qui à chaque couple de coordonnées x et y associe une valeur complexe représentative d'une modulation de phase et, par exemple, d'une modulation d'amplitude. Pour chaque couple de coordonnées x, y, la valeur complexe de la distribution A1in (x, y) aux coordonnées x, y est multipliée par la valeur complexe de la fonction de transfert Fmod1 (x, y) associée à ces coordonnées x, y, pour obtenir la valeur complexe de la distribution A1out(x,y) aux coordonnées x, y. Dit autrement, le modulateur 2 met en œuvre l'équation suivante : $A 1 out \left(x, y\right) = Fmod 1 \left(x, y\right) . A 1 in \left(x, y\right)$

Toujours dans cette approximation, dans cet exemple où le dispositif 2 est de type pixelisé, la fonction de transfert Fmod1(x,y) du modulateur 2 peut s'exprimer comme la somme d'une composante Fmod1-var(x,y) et d'une composante Fmod1-0(x,y). La composante, ou fonction de transfert, Fmod1-var(x,y) est commandable et dépend donc de la commande appliquée au dispositif 2. La composante, ou fonction de transfert Fmod1-0(x,y) est fixe et est déterminée par la mise en œuvre du modulateur 2.

De manière similaire, dans cette approximation, la fonction de transfert Fmod2 du modulateur 3 s'écrit Fmod2 (X, Y) . La fonction Fmod2(X,Y) entre la distribution A2in(X,Y) et la distribution A2out(X,Y) est une fonction qui à chaque couple de coordonnées X et Y associe une valeur complexe représentative d'une modulation de phase et, par exemple, d'une modulation d'amplitude. Pour chaque couple de coordonnées X, Y, la valeur complexe de la distribution A2in(X,Y) aux coordonnées X, Y est multipliée par la valeur complexe de la fonction de transfert Fmod2(X,Y) associée à ces coordonnées X, Y, pour obtenir la valeur complexe de la distribution A2out(X,Y) aux coordonnées X, Y. Dit autrement, le modulateur 2 met en œuvre l'équation suivante : $A 2 out \left(X, Y\right) = Fmod 2 \left(X, Y\right) . A 2 in \left(X, Y\right)$

Toujours dans cette approximation, dans cet exemple où le modulateur 3 est de type continu, la fonction de transfert Fmod2 (X, Y) du modulateur 3 ne dépend que de la commande appliquée au dispositif 3. Dit autrement, la fonction de transfert Fmod2(X,Y) ne comprend qu'une composante commandable et est dépourvue de composante fixe qui serait indépendante de la commande du modulateur 3 et déterminée par la mise en œuvre du modulateur 3.

La figure 2 illustre, de manière très schématique, un exemple de modélisation de l'optique relai 4 du système 1 de la figure 1. Toutefois, cette modélisation s'applique de manière plus générale à tout type d'optique relai 4 afocale ou quasi-afocale. Cette modélisation est faite dans l'approximation de l'optique de Fourier, et s'appuie, par exemple, sur le chapitre 5.2 de la seconde édition du livre de Joseph W. Goodman intitulé "Introduction to Fourier Optics".

La modélisation décrite en relation avec la figure 2 de l'optique relai 4 est ici décrite dans le cas où les modulateurs 2 et 3 sont considérés infiniment fins, mais s'applique plus généralement au cas de distributions A1out et A2in exprimée chacune dans un plan cartésien respectif.

En figure 2, l'optique relai 4 est exprimée, ou modélisée, comme deux transformées de Fourier F successives, en prenant en compte des fonctions de transfert L1 (x, y) et L2(u, v) représentatives, par exemple, d'éventuelles aberrations optiques et/ou de défocalisations.

La modélisation de l'optique relai 4 par deux transformées de Fourier F successives permet, par exemple, de tenir compte des facteurs d'échelle entre le système de coordonnées cartésiennes du plan de la distribution A1out(x,y) et le système de coordonnées cartésiennes du plan de la distribution A2in(X,Y).

L'optique relai 4 reçoit la distribution de champ A1out (x, y) , qu'elle multiplie par la fonction de transfert L1 (x, y) . La fonction de transfert L1 (x, y) associe, à chaque couple de coordonnées x et y du plan de la distribution A1out(x,y), une valeur complexe par laquelle est multipliée la valeur A1out(x,y) aux coordonnées x, y.

Une transformée de Fourier F est ensuite appliquée au produit A1out(x,y).L1(x, y) pour obtenir un distribution intermédiaire exprimée dans un plan de Fourier. Le résultat de cette transformée de Fourier est une distribution Ainter(u,v) qui peut s'écrire :
Ainter (u, v) = F[A1out (x, y) . L1 (x, y) ] (u, v) , où u et v sont les coordonnées dans le plan de Fourier.

La distribution Ainter(u,y) est alors multipliée par la fonction de transfert L2 (u, v). La fonction de transfert L2(u,v) associe, à chaque couple de coordonnées u, v du plan de Fourier, une valeur complexe par laquelle est multipliée la valeur de la distribution Ainter(u,v) aux coordonnées u, v.

Une autre transformée de Fourier F est ensuite appliquée au produit Ainter(u,v).L2(u,v) pour obtenir la distribution A2in(X,Y).

Dit autrement, l'optique relai 4 met en œuvre l'équation suivante : $A 2 in \left(X, Y\right) = F \left[F\left[A1out\left(x, y\right).L1\left(x, y\right)\right]\left(u, v\right).L2\left(u, v\right)\right] \left(X, Y\right)$

La personne du métier est en mesure de caractériser l'optique relai 4 pour déterminer les fonctions L1 (x, y) et L2(u,v) de cette optique relai. Dit autrement, la personne du métier est en mesure de déterminer les fonctions L1(x,y) et L2(u,v) pour modéliser l'optique relai 4. Les fonctions L1(x,y) et L2(u,v) sont alors des paramètres fixes du système 1.

La modélisation décrite ci-dessus de l'optique relai 4 de la figure 1 s'applique à d'autres exemples d'optique relai 4, et même à une propagation libre entre les modulateurs 2 et 3 lorsque le système 1 est dépourvu d'optique relai 4.

En se référant de nouveau à la figure 1, le système 1 peut être utilisé pour la construction de faisceaux complexes pour l'usinage, la découpe, la soudure et la gravure laser. Le système 1 peut aussi être utilisé pour la construction de faisceaux complexes pour la photopolymérisation, par exemple à 2 photons, par exemple dans une imprimante 3D. Le système 1 peut aussi être utilisé pour construire des pinces optiques, ou pour fournir un signal d'excitation d'un processus optique non linéaire. Le système 1 peut également être utilisé pour fournir un signal de photo-simulation, par exemple pour stimuler une région du cerveau humain. Le système 1 peut aussi être utilisé dans les systèmes de projection d'images, par exemple d'images holographiques.

Un avantage du système 1 et du fait que les deux modulateurs 2 et 3 soient commandables est que le même système 1 peut fournir une première distribution cible A2out puis une deuxième distribution cible A2out différente de la première en modifiant de manière appropriée les commandes appliquées à ces deux modulateurs, par exemple, par le circuit CTRL.

Le système 1 peut également permettre un multiplexage temporel, par exemple en modifiant la commande du plus rapide des modulateurs 2 et 3, c'est-à-dire le modulateur de type continu, pendant que la commande de l'autre modulateur reste inchangée ou presque.

On a décrit ci-dessus en relation avec la figure 1 un mode de réalisation dans lequel le modulateur 2 est de type pixelisé et le modulateur 3 est de type continu. L'inverse est également possible, les modulateurs 2 et 3 étant alors respectivement de type continu et de type pixelisé.

Dans une telle variante de réalisation la fonction de transfert Fmod2 du modulateur 3 peut s'exprimer comme la somme d'une composante Fmod2-var et d'une composante Fmod2-0. La composante, ou fonction de transfert, Fmod2-var est commandable et dépend donc de la commande appliquée au modulateur 3. La composante, ou fonction de transfert Fmod2-0 est fixe et non commandable par le modulateur 3, c'est-à-dire qu'elle est constante quelle que soit la commande du modulateur 3. La composante Fmod2-0 est déterminée par la mise en œuvre du modulateur 3. A titre d'exemple, la composante fixe Fmod2-0 de la fonction de transfert Fmod2 est déterminée, au moins en partie, par les espaces entre les pixels du modulateur 3 et les matériaux disposés dans ces espaces. En outre, dans une telle variante, la fonction de transfert Fmod1 du modulateur 2 ne dépend que de la commande appliquée au dispositif 2. Dit autrement, la fonction de transfert Fmod1 ne comprend qu'une composante commandable Fmod1-var et est dépourvue de composante fixe non commandable Fmod1-0.

Ainsi, dans cette variante, la distribution A2in, qui est déterminée par la distribution A1out, comprend, comme la distribution A1out, uniquement une composante commandable par le dispositif 2. Le produit de la fonction Fmod2-0 et de la distribution A2in correspond alors à la composante de la distribution A2out qui n'est commandable que par le dispositif 2.

La personne du métier est mesure d'adapter cette variante à l'exemple d'approximation où les modulateurs 2 et 3 sont considérés comme étant infiniment fins.

Par ailleurs, bien que l'on ait décrit précédemment le cas où les modulateurs 2 et 3 sont tous les deux des modulateurs fonctionnant en réflexion, c'est-à-dire qui réfléchissent, en la modulant, la lumière qu'ils reçoivent, le modulateur 2 et/ou le modulateur 3 peuvent être des modulateurs fonctionnant en transmission, c'est-à-dire des modulateurs qui transmettent, en la modulant, la lumière qu'ils reçoivent.

A titre d'exemple de système 1, dans le cas où le modulateur 3 fonctionne en transmission, le modulateur 2 fonctionne en réflexion et le modulateur 3 est accolé au modulateur 2, la lumière qui se propage dans le système 1 traverse une première fois le modulateur 3 qui lui applique une première modulation, puis est réfléchie par le modulateur 2 qui lui applique une deuxième modulation, avant de traverser une deuxième fois le modulateur 3 qui lui applique une troisième modulation identique à la première. Dans ce cas, le modulateur 3 est non seulement disposé en amont du modulateur 2 pour lui fournir la distribution A1in et en aval du modulateur 2 pour recevoir la distribution A1out et fournir la distribution A2out à partir de la distribution A1out. La personne du métier sera en mesure d'adapter la description faite précédemment à cet exemple, notamment la façon dont les commandes des modulateurs 2 et 3 sont déterminées.

Jusqu'ici, les modulateurs 2 et 3 ont été approximés chacun par un plan, c'est à dire considérés comme infiniment fins.

Dans une autre approximation, les modulateurs 2 et 3 ne sont pas considérés comme infiniment fin, et les fonctions de transfert Fmod1 et Fmod2 peuvent s'exprimées chacune sous forme matricielle. Dans cette autre approximation, A1out est égale au produit matriciel de Fmod1 par A1in, c'est à dire que A1out = Fmod1.A1in, et A2out est égale au produit matriciel de Fmod2 par A2in, c'est à dire que A2out = Fmod2.A2in. A titre d'exemple, les matrices A2out et A2in ont une de leurs dimensions égale à 1. A titre d'exemple, les distributions A1in et A1out peuvent être exprimées dans deux plans différents, et/ou les distribution A2in et A2out peuvent être exprimées dans deux plans différents.

En restant dans l'approximation matricielle introduite ci-dessus, à titre d'exemple, le modulateur 2 est de type pixélisé.

La fonction de transfert (ou matrice) Fmod1 du modulateur 2 peut alors s'exprimer comme la somme d'une composante ou matrice Fmod1-var et d'une composante ou matrice Fmod1-0. La composante, ou fonction de transfert, Fmod1-var est commandable par le dispositif 2. La composante, ou fonction de transfert Fmod1-0 est non commandable par le dispositif 2. Il en résulte que A1out est égale à la somme du produit matriciel de Fmod1-0 par A1in et du produit matriciel de Fmod1-var par Ain, c'est-à-dire que la matrice Fmod1-var.A1in est la composante commandable par le modulateur 2 de la distribution A1out et la matrice Fmod1-0.A1in est la composante fixe, non commandable par le modulateur 2, de la distribution A1out.

En outre, dans cet exemple, le modulateur 3 est de type continu et la fonction de transfert ou matrice Fmod2 ne comprend alors qu'une composante commandable Fmod2-var et est dépourvue de composante fixe Fmod2-0 indépendante de la commande du modulateur 3. De manière similaire à ce qui a été indiqué précédemment en relation avec la figure 1, la distribution A2in, qui est déterminée par la distribution A1out, comprend alors une composante A2in-0 qui n'est pas commandable par le dispositif 2 et qui peut être représenté sous forme matricielle. Le produit matriciel de la composante A2in-0 de la distribution A2in par la fonction ou matrice Fmod2-var correspond alors à la composante de la distribution A2out qui n'est commandable que par le dispositif 3.

En restant dans l'approximation matricielle introduite ci-dessus, selon un autre d'exemple, le modulateur 2 est de type continu.

Dans cet autre exemple, la fonction de transfert ou matrice Fmod1 ne comprend alors qu'une composante commandable Fmod1-var et est dépourvue de composante fixe Fmod1-0. En outre, le modulateur 3 est de type pixelisé et la fonction de transfert (ou matrice) Fmod2 du modulateur 3 peut alors s'exprimer comme la somme d'une composante ou matrice Fmod2-var et d'une composante ou matrice Fmod2-0. La composante, ou fonction de transfert, Fmod2-var est commandable et dépend donc de la commande appliquée au dispositif 3. La composante, ou fonction de transfert Fmod2-0 est non commandable par le modulateur 3.

Dans cet autre exemple, la distribution A2in, qui est déterminée par la distribution A1out, comprend uniquement une composante commandable par le dispositif 2. Le produit matriciel de la fonction Fmod2-0 et de la distribution A2in correspond alors à la composante de la distribution A2out qui n'est commandable que par le dispositif 2.

A titre d'exemple, dans l'approximation matricielle introduite ci-dessus, une propagation libre ou une optique relai fournissant la distribution ou matrice A2in à partir de la distribution ou matrice A1out peut être caractérisée et représentée par une matrice Mtransfert, de sorte que A2in soit égale au produit matriciel de la matrice Mtransfert par A1out, c'est à dire que A2in = Mtransfert.A1out. La détermination de la matrice Mtransfert est à la portée de la personne du métier.

Selon un autre exemple, dans l'approximation matricielle introduite ci-dessus et de manière similaire à ce qui a été décrit en relation avec la figure 2, A2in = F[F[L1.A1out] .L2], avec L1 et L2 deux fonctions de transfert sous forme matricielle caractérisant cette propagation libre ou cette optique relai. Dit autrement, une transformée de Fourier F est appliquée au produit matriciel de la matrice L1 par la matrice A1out ce qui permet l'obtention d'une matrice intermédiaire dans le plan de Fourier, puis une nouvelle transformée de Fourier est appliquée au produit matriciel de la matrice intermédiaire par la matrice L2. La détermination des matrices L1 et L2 est à la portée de la personne du métier. Du fait que les transformés de Fourier peuvent également être exprimées sous la forme de matrices, cet autre exemple n'est qu'un cas particulier du cas où A2in = Mtransfert.A1out.

Dans un cas encore plus général, les modulateurs 2 et 3 ne sont pas considérés comme infiniment fin, et, en outre, les distributions A1out, A1in, A2out et A2in, et les fonctions de transfert Fmod1 et Fmod2 ne sont pas exprimées sous forme matricielle. Dans ce cas, A1out est égale à la fonction Fmod1 appliquée à A1in, c'est à dire que A1out = Fmod1(A1in), et A2out est égale à la fonction Fmod2 appliquée à A2in, c'est à dire que A2out = Fmod2(A2in).

En restant dans le cas général introduit ci-dessus, à titre d'exemple, le modulateur 2 est de type pixélisé.

La fonction de transfert Fmod1 du modulateur 2 peut alors s'exprimer comme la somme d'une composante ou fonction Fmod1-var et d'une composante ou fonction Fmod1-0. La fonction Fmod1-var est commandable et dépend donc de la commande appliquée au dispositif 2. La fonction Fmod1-0 est non commandable par le modulateur 2. Il en résulte que A1out = Fmod1-0(A1in) + Fmod1-var(A1in), avec Fmod1-var(A1in) la composante commandable par le modulateur 2 de la distribution A1out et Fmod1-0(A1in) la composante fixe, non commandable par le modulateur 2, de la distribution A1out.

En outre, dans cet exemple, le modulateur 3 est de type continu et la fonction de transfert ou matrice Fmod2 ne comprend alors qu'une composante commandable Fmod2-var.

De manière similaire à ce qui a été indiqué précédemment en relation avec la figure 1, la distribution A2in, qui est déterminée par la distribution A1out, comprend alors une composante A2in-0 qui n'est pas commandable par le dispositif 2. L'application de la fonction Fmod2-var à cette composante A2in-0, c'est-à-dire Fmod2-var(A2in-0), correspond alors à la composante de la distribution A2out qui n'est commandable que par le dispositif 3.

En restant dans ce cas plus général introduit ci-dessus, selon un autre d'exemple, le modulateur 2 est de type continu.

La fonction de transfert Fmod1 ne comprend alors qu'une composante commandable Fmod1-var. En outre, le modulateur 3 est de type pixelisé et la fonction de transfert Fmod2 du modulateur 3 peut alors s'exprimer comme la somme d'une composante ou fonction Fmod2-var et d'une composante ou fonction Fmod2-0. La fonction Fmod2-var est commandable et dépend donc de la commande appliquée au dispositif 3. La fonction Fmod2-0 est non commandable par le modulateur 3. Il en résulte que A2out = Fmod2-var(A2in) + Fmod2-0(A2in).

Dans cet exemple, la distribution A2in, qui est déterminée par la distribution A1out, comprend uniquement une composante commandable par le dispositif 2. Ainsi, Fmod2-0(A2in) correspond à la composante de la distribution A2out qui est commandable que par le dispositif 2.

A titre d'exemple, dans le cas plus général introduit ci-dessus, une propagation libre ou une optique relai fournissant la distribution ou matrice A2in à partir de la distribution ou matrice A1out peut être caractérisée et représentée par une fonction Mtransfert, de sorte que A2in Mtransfert(A1out). La détermination de la fonction Mtranfert est à la portée de la personne du métier.

Selon un autre exemple, dans le cas plus général introduit ci-dessus et de manière similaire à ce qui a été décrit en relation avec la figure 2 A2in = F[L2(F[L1(A1out) ])], avec L1 et L2 deux fonctions de transfert caractérisant cette propagation libre ou cette optique relai. La détermination des fonctions L1 et L2 est à la portée de la personne du métier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la personne du métier est en mesure de déterminer les commandes, ou les configurations, des modulateurs 2 et 3 pour obtenir une distribution cible A2out dans laquelle la composante commandable uniquement par le modulateur de type continu contribue activement au signal utile de cette distribution, et dans laquelle la composante commandable uniquement par le modulateur de type continu est déterminée au moins en partie par la composante non commandable de la fonction de transfert du modulateur de type pixelisé et par la fonction de transfert du modulateur de type continu. Notamment, pour déterminer ces commandes ou configuration, la personne du métier est en mesure d'utiliser d'autres modélisations et/ou approximations que celles décrites précédemment. Par exemple, bien que la description ait été faite dans le cadre de l'approximation de l'optique de Fourier, la personne du métier est en mesure de transposer cette description dans le cadre d'approximations moins simplificatrices, par exemple en utilisant une approximation basée sur des intégrales de Wolf ou la méthode de Fourier modale (FMM de l'anglais "Fourier Modal Method"), également appelée analyse rigoureuse d'ondes couplées (RCWA de l'anglais "Rigorous Coupled Wave Analysis").

## Revendications

1. Système optique de modulation de front d'onde comprenant un premier dispositif (2) de modulation de front d'onde et un deuxième dispositif (3) de modulation de front d'onde, dans lequel :
le premier dispositif (2) est disposé en amont du deuxième dispositif (3) ;
les premier et deuxième dispositifs (2, 3) sont commandables ;
l'un des premier et deuxième dispositifs (2, 3) est de type pixelisé, l'autre des premier et deuxième dispositifs (2, 3) étant de type continu ;
les premier et deuxième dispositifs (2, 3) sont configurés pour fournir une distribution de champ cible comprenant une première composante commandable par les premier et deuxième dispositifs et une deuxième composante commandable uniquement par celui des premier et deuxième dispositifs qui est de type continu, la deuxième composante participant à un signal utile de la distribution de champ cible et étant déterminée par celui des premier et deuxième dispositifs qui est de type pixélisé et par une commande appliquée à celui des premier et deuxième dispositifs qui est de type continu.

2. Système optique selon la revendication 1, dans lequel :
le premier dispositif (2) est configuré pour recevoir une distribution de champ A1in et fournir une distribution de champ A1out égale à Fmod1.A1in, avec Fmod1 une fonction de transfert du premier dispositif (2) ;
le deuxième dispositif est configuré pour recevoir une distribution de champ A2in et pour fournir une distribution de champ A2out égale à Fmod2.A2in, avec Fmod2 une fonction de transfert du deuxième dispositif ; et
le système est configuré pour que la distribution A2in soit fonction de la distribution A1out, et dans lequel :
- le premier dispositif (2) est de type pixelisé et Fmod1=Fmod1-var+Fmod1-0 avec Fmod1-var une composante commandable et Fmod1-0 une composante fixe ; ou
- le deuxième dispositif (3) est de type pixélisé et Fmod2=Fmod2-var+Fmod2-0 avec Fmod2-var une composante commandable et Fmod2-0 une composante fixe.

3. Système optique selon la revendication 1, dans lequel :
le premier dispositif (2) est configuré pour recevoir une distribution de champ A1in et fournir une distribution de champ A1out égale à Fmod1(A1in), avec Fmod1 une fonction de transfert du premier dispositif (2) ;
le deuxième dispositif est configuré pour recevoir une distribution de champ A2in et pour fournir une distribution de champ A2out égale à Fmod2(A2in), avec Fmod2 une fonction de transfert du deuxième dispositif ; et
le système est configuré pour que la distribution A2in soit fonction de la distribution A1out, et dans lequel :
- le premier dispositif (2) est de type pixelisé et Fmod1=Fmod1-var+Fmod1-0 avec Fmod1-var une composante commandable et Fmod1-0 une composante fixe ; ou
- le deuxième dispositif (3) est de type pixélisé et Fmod2=Fmod2-var+Fmod2-0 avec Fmod2-var une composante commandable et Fmod2-0 une composante fixe.

4. Système optique selon la revendication 2 ou 3, dans lequel le système optique (1) de modulation de front d'onde comprend une optique relai (4) configurée pour fournir la distribution A2in à partir de la distribution A1out.

5. Système optique selon la revendication 4 prise dans sa dépendance à la revendication 2, dans lequel, lorsque le premier dispositif est approximé par un premier plan et le deuxième dispositif est approximé par un deuxième plan, l'optique relai (4) est configurée pour mettre en œuvre l'équation suivante :
A2in (X, Y) = F[F[A1out (x, y) .L1(x, y) ] (u, v) .L2 (u, v) ] (X, Y), avec x et y des coordonnées cartésiennes dans le premier plan, X et Y des coordonnées cartésiennes dans le deuxième plan, L1 (x, y) une fonction de transfert appliquée à la distribution A1out(x,y), F l'opération transformée de Fourier, u et v des coordonnées dans un plan de Fourier de l'optique relai, et L2(u,v) une fonction de transfert appliquée à une distribution exprimée dans ledit plan de Fourier.

6. Système optique selon la revendication 4 ou 5, dans lequel l'optique relai (4) est afocale ou quasi-afocale.

7. Système optique selon la revendication 2, dans lequel ledit système optique (1) est configuré pour mettre en œuvre une propagation libre du premier dispositif (2) vers le deuxième dispositif (3).

8. Système optique selon l'une quelconque des revendications 2 à 7, dans lequel A2in est égal à A1out, par exemple à un changement de repère cartésien près.

9. Système optique selon l'une quelconque des revendications 1 à 8, dans lequel le premier dispositif (2) est de type pixélisé.

10. Système optique selon l'une quelconque des revendications 1 à 9, dans lequel le système optique (1) de modulation de front d'onde comprend en outre un circuit de commande (CTRL) configuré pour fournir des signaux de commande aux premier et deuxième dispositifs (2, 3).

11. Système optique selon la revendication 10, dans lequel le circuit de commande (CTRL) est configuré pour modifier lesdits signaux de commande de sorte à modifier ladite distribution de champ cible.

12. Système optique selon l'une quelconque des revendications 1 à 11, dans lequel le premier dispositif (2) met en œuvre au moins une modulation en phase et le deuxième dispositif (3) met en œuvre au moins une modulation en phase.

13. Système optique selon l'une quelconque des revendications 1 à 12, dans lequel celui des premier et deuxième dispositifs (2, 3) qui est de type pixélisé est un dispositif à cristaux liquides sur silicium.

14. Système optique selon l'une quelconque des revendications 1 à 13, dans lequel celui des premier et deuxième dispositifs (2, 3) qui est de type continu est un miroir déformable.

15. Système optique selon l'une quelconque des revendications 1 à 14, comprenant en outre un objectif de focalisation (OBJ) configuré pour recevoir la distribution de champ cible A2out.

## Patentansprüche

1. Ein optisches Wellenfront-Modulationssystem, das eine erste Wellenfront-Modulationseinrichtung (2) und eine zweite Wellenfront-Modulationseinrichtung (3) aufweist, wobei:
die erste Einrichtung (2) stromaufwärts der zweiten Einrichtung (3) angeordnet ist;
die erste und die zweite Einrichtung (2, 3) steuerbar sind;
eine der ersten und zweiten Einrichtungen (2, 3) von einem pixelierten Typ ist, wobei die andere der ersten und zweiten Einrichtungen (2, 3) von einem kontinuierlichen Typ ist;
die erste und die zweite Einrichtung (2, 3) eingerichtet sind, eine Zielfeldverteilung bereitzustellen, die eine erste Komponente, die durch die erste und die zweite Einrichtung steuerbar ist, und eine zweite Komponente aufweist, die nur durch diejenige der ersten und zweiten Einrichtungen steuerbar ist, die vom kontinuierlichen Typ ist, wobei die zweite Komponente an einem Nutzsignal der Zielfeldverteilung beteiligt ist und durch diejenige der ersten und zweiten Einrichtungen, die vom pixelierten Typ ist, sowie durch eine Steuerung bestimmt wird, die auf diejenige der ersten und zweiten Einrichtungen angewendet wird, die vom kontinuierlichen Typ ist.

2. Das optische System nach Anspruch 1, wobei:
die erste Einrichtung (2) eingerichtet ist zum Empfangen einer Feldverteilung A1in und zum Bereitstellen einer Feldverteilung A1out gleich Fmod1.A1in, wobei Fmod1 eine Übertragungsfunktion der ersten Einrichtung (2) ist;
die zweite Einrichtung eingerichtet ist zum Empfangen einer Feldverteilung A2in und zum Bereitstellen einer Feldverteilung A2out gleich Fmod2.A2in, wobei Fmod2 eine Übertragungsfunktion der zweiten Einrichtung ist;
und das System so eingerichtet ist, dass die Verteilung A2in eine Funktion der Verteilung A1out ist, und wobei:
- die erste Einrichtung (2) von dem pixelierten Typ ist und Fmod1=Fmod1-var+Fmod1-0 gilt, wobei Fmod1-var eine steuerbare Komponente und Fmod1-0 eine feste Komponente ist; oder
- die zweite Einrichtung (3) von dem pixelierten Typ ist und Fmod2=Fmod2-var+Fmod2-0 gilt, wobei Fmod2-var eine steuerbare Komponente und Fmod2-0 eine feste Komponente ist.

3. Das optische System nach Anspruch 1, wobei:
die erste Einrichtung (2) eingerichtet ist zum Empfangen einer Feldverteilung A1in und zum Bereitstellen einer Feldverteilung A1out gleich Fmod1(A1in), wobei Fmod1 eine Übertragungsfunktion der ersten Einrichtung (2) ist;
die zweite Einrichtung eingerichtet ist zum Empfangen einer Feldverteilung A2in und zum Bereitstellen einer Feldverteilung A2out gleich Fmod2(A2in), wobei Fmod2 eine Übertragungsfunktion der zweiten Einrichtung ist; und
das System so eingerichtet ist, dass die Verteilung A2in eine Funktion der Verteilung A1out ist, und wobei:
- die erste Einrichtung (2) von einem pixelierten Typ ist und Fmod1=Fmod1-var+Fmod1-0 gilt, wobei Fmod1-var eine steuerbare Komponente und Fmod1-0 eine feste Komponente ist; oder
- die zweite Einrichtung (3) von einem pixelierten Typ ist und Fmod2=Fmod2-var+Fmod2-0 gilt, wobei Fmod2-var eine steuerbare Komponente und Fmod2-0 eine feste Komponente ist.

4. Das optische System nach Anspruch 2 oder 3, wobei das optische Wellenfront-Modulationssystem (1) eine Relaisoptik (4) aufweist, die eingerichtet ist, die Verteilung A2in aus der Verteilung A1out bereitzustellen.

5. Das optische System nach Anspruch 4 in seiner Abhängigkeit von Anspruch 2, wobei, wenn die erste Einrichtung durch eine erste Ebene angenähert wird und die zweite Einrichtung durch eine zweite Ebene angenähert wird, die Relaisoptik (4) eingerichtet ist, die folgende Gleichung zu implementieren:
A2in(X,Y) = F[FA1out(x,y).L1(x,y)](u,v).L2(u,v)](X,Y), wobei x und y kartesische Koordinaten in der ersten Ebene, X und Y kartesische Koordinaten in der zweiten Ebene, L1(x,y) eine auf die Verteilung A1out(x,y) angewendete Übertragungsfunktion, F die Fourier-Transformationsoperation, u und v Koordinaten in einer Fourier-Ebene der Relaisoptik und L2(u,v) eine auf eine in der genannten Fourier-Ebene ausgedrückte Verteilung angewendete Übertragungsfunktion sind.

6. Das optische System nach Anspruch 4 oder 5, wobei die Relaisoptik (4) afokal oder quasi-afokal ist.

7. Das optische System nach Anspruch 2, wobei das optische System (1) eingerichtet ist, eine freie Ausbreitung von der ersten Einrichtung (2) zu der zweiten Einrichtung (3) zu implementieren.

8. Das optische System nach einem der Ansprüche 2 bis 7, wobei A2in gleich A1out ist, beispielsweise bis auf ein kartesisches Koordinatentransformationsäquivalentes System genau.

9. Das optische System nach einem der Ansprüche 1 bis 8, wobei die erste Einrichtung (2) von dem pixelierten Typ ist.

10. Das optische System nach einem der Ansprüche 1 bis 9, wobei das optische Wellenfront-Modulationssystem (1) ferner eine Steuerschaltung (CTRL) aufweist, die eingerichtet ist, Steuersignale für die erste und die zweite Einrichtung (2, 3) bereitzustellen.

11. Das optische System nach Anspruch 10, wobei die Steuerschaltung (CTRL) eingerichtet ist, die Steuersignale zu modifizieren, um die Zielfeldverteilung zu modifizieren.

12. Das optische System nach einem der Ansprüche 1 bis 11, wobei die erste Einrichtung (2) wenigstens eine Phasenmodulation implementiert und die zweite Einrichtung (3) wenigstens eine Phasenmodulation implementiert.

13. Das optische System nach einem der Ansprüche 1 bis 12, wobei diejenige der ersten und zweiten Einrichtungen (2, 3), die von einem pixelierten Typ ist, eine Flüssigkristall-Einrichtung auf Silizium ist.

14. Das optische System nach einem der Ansprüche 1 bis 13, wobei diejenige der ersten und zweiten Einrichtungen (2, 3), die von einem kontinuierlichen Typ ist, ein verformbarer Spiegel ist.

15. Das optische System nach einem der Ansprüche 1 bis 14, ferner aufweisend eine Fokussierlinse (OBJ), die eingerichtet ist, die Zielfeldverteilung A2out zu empfangen.

## Claims

1. An optical wavefront modulation system comprising a first wavefront modulation device (2) and a second wavefront modulation device (3), wherein:
the first device (2) is arranged upstream of the second device (3);
the first and second devices (2, 3) are controllable;
one of the first and second devices (2, 3) is of the pixelated type, the other of the first and second devices (2, 3) being of the continuous type;
the first and second devices (2, 3) are configured to provide a target field distribution comprising a first component controllable by the first and second devices, and a second component controllable only by that of the first and second devices which is of the continuous type, the second component participating in a useful signal of the target field distribution and being determined by that of the first and second devices which is of the pixelated type and by a control applied to that of the first and second devices which is of the continuous type.

2. The optical system according to claim 1, wherein:
the first device (2) is configured to receive a field distribution Alin, and to provide a field distribution Alout equal to Fmod1.A1in, with Fmod1 a transfer function of the first device (2);
the second device is configured to receive a field distribution A2in, and to provide a field distribution A2out equal to Fmod2.A2in, with Fmod2 a transfer function of the second device; and
the system is configured so that the distribution A2in is a function of the distribution A1out, and wherein:
- the first device (2) is of the pixelated type and Fmod1=Fmod1-var+Fmod1-0, with Fmod1-var a controllable component, and Fmod1-0 a fixed component; or
- the second device (3) is of the pixelated type and Fmod2=Fmod2-var+Fmod2-0, with Fmod2-var a controllable component, and Fmod2-0 a fixed component.

3. The optical system according to claim 1, wherein:
the first device (2) is configured to receive a field distribution A1in, and to provide a field distribution A1out equal to Fmod1(A1in), with Fmod1 a transfer function of the first device (2);
the second device is configured to receive a field distribution A2in, and to provide a field distribution A2out equal to Fmod2(A2in), with Fmod2 a transfer function of the second device; and
the system is configured so that the distribution A2in is a function of the distribution A1out, and wherein:
- the first device (2) is of pixelated type and Fmod1=Fmod1-var+Fmod1-0, with Fmod1-var a controllable component, and Fmod1-0 a fixed component; or
- the second device (3) is of pixelated type, and Fmod2=Fmod2-var+Fmod2-0, with Fmod2-var a controllable component, and Fmod2-0 a fixed component.

4. The optical system according to claim 2 or 3, wherein the optical wavefront modulation system (1) comprises a relay optics (4) configured to provide the distribution A2in from the distribution A1out.

5. The optical system according to claim 4 taken in its dependency on claim 2, wherein, when the first device is approximated by a first plane, and the second device is approximated by a second plane, the relay optics (4) is configured to implement the following equation:
A2in(X,Y) = F[F[A1out(x,y).L1(x,y)](u,v).L2(u,v)](X,Y), with x and y Cartesian coordinates in the first plane, X and Y Cartesian coordinates in the second plane, L1(x,y) a transfer function applied to the distribution A1out(x,y), F the Fourier transform operation, u and v coordinates in a Fourier plane of the relay optics, and L2(u,v) a transfer function applied to a distribution expressed in said Fourier plane.

6. The optical system according to claim 4 or 5, wherein the relay optics (4) is afocal or quasi-afocal.

7. The optical system according to claim 2, wherein said optical system (1) is configured to implement free propagation from the first device (2) to the second device (3).

8. The optical system according to any one of claims 2 to 7, wherein A2in is equal to A1out, for example to within one Cartesian coordinate system change.

9. The optical system according to any one of claims 1 to 8, wherein the first device (2) is of the pixelated type.

10. The optical system according to any one of claims 1 to 9, wherein the optical wavefront modulation system (1) further comprises a control circuit (CTRL) configured to provide control signals to the first and second devices (2, 3).

11. The optical system according to claim 10, wherein the control circuit (CTRL) is configured to modify said control signals so as to modify said target field distribution.

12. The optical system according to any one of claims 1 to 11, wherein the first device (2) implements at least a phase modulation, and the second device (3) implements at least a phase modulation.

13. The optical system according to any one of claims 1 to 12, wherein that of the first and second devices (2, 3) which is of pixelated type is a liquid crystal device on silicon.

14. The optical system according to any one of claims 1 to 13, wherein that of the first and second devices (2, 3) which is of continuous type is a deformable mirror.

15. The optical system according to any one of claims 1 to 14, further comprising a focusing lens (OBJ) configured to receive the target field distribution A2out.
